# EUROPEAN PATENT APPLICATION

(11) **EP 4 546 803 A1**
(43) Date of publication of application: **30.04.2025**
(21) Application number: 24719866.6
(22) Date of filing: 12.04.2024
(51) Int. Cl.: H04N 21/462, H04N 21/442, H04N 21/436, H04N 21/478

(54) **ELECTRONIC DEVICE AND DATA TRANSMISSION METHOD THEREOF**

(30) Priority: 30.08.2023 KR 20230114958; 30.11.2023 KR 20230171194
(71) Applicant: Samsung Electronics Co., Ltd., Suwon-si, Gyeonggi-do 16677 (KR)
(72) Inventor: HAN, Yunkyoung, Suwon-si Gyeonggi-do 16677 (KP)
(74) Representative: Appleyard Lees IP LLP
(86) International application number: PCT/KR2024/004978
(87) International publication number: WO 2025/048104

(57) **Abstract**

An electronic device (100) is provided. The electronic device (100) includes a first communication interface (110), a second communication interface (120) configured to perform communication wirelessly with a display device (200), and one or more processors (140) configured to receive image data from an external device (300) through the first communication interface (110), identify a type of content included in the image data based on information received from the external device (300) through the first communication interface (110), based on a network quality between the electronic device (100) and the display device (200), change resolution or frame rate of the image data based on the type of content, and transmit the image data of which resolution or frame rate has been changed, to the display device (200) through the second communication interface (120).

## Description

### [Technical Field]

This disclosure relates to an electronic device that transmits data wirelessly and a method for transmitting data thereof.

### Description of the Related Art

Recently, with development of electronic technology, display devices such as TVs are wirelessly connected to peripheral devices, providing better aesthetics of display devices.

Meanwhile, if the wireless connection condition between the display devices and their peripheral devices deteriorates due to interference or the like, wireless connection between the display devices and the peripheral devices may be affected.

### SUMMARY

An electronic device according to an embodiment includes a first communication interface, a second communication interface configured to perform communication wirelessly with a display device, and one or more processors. The one or more processors are configured to receive image data from an external device through the first communication interface. The one or more processors are configured to identify a type of content included in the image data based on information received from the external device through the first communication interface. The one or more processors are configured to, based on a network quality between the electronic device and the display device, change resolution or frame rate of the image data based on the type of content. The one or more processors are configured to transmit the image data of which resolution or frame rate has been changed, to the display device through the second communication interface. The one or more processors may be configured to, based on a network quality between the electronic device and the display device being not good, change resolution or frame rate of the image data based on the type of content. The network quality being not good may correspond to the network quality being below a chosen level. The network quality being good may correspond to the network quality being above a chosen level.

The one or more processors may identify a type of the content based on Auto Low Latency Mode (ALLM) information received from the external device through the first communication interface.

The content included in the image data may be a game content or a general content.

The one or more processors, based on the content being the game content, may resolution of the image data by downscaling the image data, and based on the content being the general content, may change frame rate of the image data using frame skip.

Based on the content being the game content, frame rate of the image data may not be changed, and based on the content being the general content, resolution of the image data may not be changed.

The data received from the external device may include the image data, audio data and metadata. The one or more processors, based on a network quality between the electronic device and the display device being good, may compress the image data of which resolution or frame rate is changed using video codec, may compress the audio data using audio codec, and may transmit the compressed image data, the compressed audio data and the metadata to the display device through the second communication interface. The metadata may include ALLM information.

The data received from the external device may include the image data, audio data and metadata. The one or more processors, based on a network quality between the electronic device and the display device being good, may compress the image data using a video codec, compress the audio data using an audio codec, and transmit the compressed image data, the compressed audio data and the metadata to the display device through the second communication interface. The metadata may include ALLM information.

The one or more processors may receive information regarding a network quality between the electronic device and the display device from the display device through the second communication interface, and identify a network quality between the electronic device and the display device based on the received information.

The information regarding the network quality may include a packet loss rate.

A method for transmitting data of an electronic device that performs communication with a display device wirelessly according to an embodiment includes receiving image data from an external device, identifying a type of content included in the image data based on information received from the external device, based on a network quality between the electronic device and the display device, changing resolution or frame rate of the image data based on the type of content, and transmitting the image data of which resolution or frame rate has been changed, to the display device. The changing resolution or frame rate of the image data may be based on a network quality between the electronic device and the display device being not good.

In a computer-readable recording medium storing computer instructions that cause an electronic device to perform an operation when executed by one or more processors of the electronic device that performs communication wirelessly with a display device, the operation includes receiving image data from an external device, identifying a type of content included in the image data based on information received from the external device, based on a network quality between the electronic device and the display device, changing resolution or frame rate of the image data based on the type of content, and transmitting the image data of which resolution or frame rate has been changed, to the display device. The changing resolution or frame rate of the image data may be based on a network quality between the electronic device and the display device being not good.

### BRIEF DESCRIPTION OF THE DRAWINGS

FIG. 1 is a view provided to schematically explain that an electronic device transmits image data according to an embodiment;
FIG. 2 is a block diagram provided to explain configuration of an electronic device according to an embodiment;
FIG. 3 is a flowchart provided to explain an operation in which an electronic device transmits image data to a display device;
FIG. 4 is a view provided to explain an operation of an electronic device according to an embodiment;
FIG. 5 is a block diagram provided to explain configuration of a display device according to an embodiment;
FIG. 6 is a flowchart provided to explain an operation in which a display device obtains information regarding a network quality according to an embodiment;
FIG. 7 is a flowchart provided to explain an operation in which a display device processes data received from an electronic device according to an embodiment;
FIG. 8 is a view provided to explain an operation of a display device according to an embodiment; and
FIG. 9 is a flowchart provided to explain a method of transmitting data of an electronic device that performs communication wirelessly with a display device.

### DETAILED DESCRIPTION

The various embodiments of the present disclosure and the terms used herein are not intended to limit the technical features described in the present disclosure to specific embodiments, and should be understood to include various changes, equivalents, or replacements of the embodiments.

In connection with the description of the drawings, similar reference numerals may be used for similar or related components.

The singular form of a noun corresponding to an item may include a single item or a plurality of items, unless the relevant context clearly indicates otherwise.

In the present disclosure, "A or B", "at least one of A and B", "at least one of A or B", "A, B or C", "at least one of A, B and C", and "at least one of A, B, or C" may include any one of the items listed together in the corresponding phrase, or any possible combination thereof. For example, "A or B," "at least one of A and B," or "at least one of A or B" may refer to (1) at least one A, (2) at least one B, or (3) both at least one A and at least one B.

Terms such as "first" or "second" may be used simply to distinguish one component from another, and do not limit the corresponding components in other respects (e.g., importance or order).

When one component (e.g., first) is said to be "coupled" or "connected" to another component (e.g., second) with or without the term of "functionally" or "communicatively", it means that one component can be connected to another component directly (e.g., via cable), wirelessly, or through a third component.

Terms such as "include" or "have" are intended to indicate the presence of features, numbers, steps, operations, components, parts, or combinations thereof described in this disclosure, but are not intended to preclude the possibility of the presence or addition of one or more other features, numbers, or steps, operations, components, parts, or combinations thereof.

When a component is said to be "connected," "coupled," "supported," or "in contact" with another component, this means not only the case where the components are directly connected, coupled, supported, or in contact, but also the case where they are indirectly connected, coupled, supported, or in contact through a third component.

When a component is said to be located "on" another component, this includes not only the where a component is in contact with another component, but also the case where another component exists between the two components.

The term "and/or" includes a combination of a plurality of related components described herein or any component of a plurality of related components disclosed herein.

In some situations, the phrase "apparatus configured to" can mean that the apparatus is "capable of" working with other apparatus or components. For example, the phrase "processor configured (or set) to perform A, B, and C" may refer to a processor dedicated to performing the corresponding operations (e.g., an embedded processor), or a generic-purpose processor (e.g., a CPU or application processor) capable of performing the corresponding operations by executing one or more software programs stored on a memory device.

In embodiments, a "module" or "part" performs at least one function or operation, and may be implemented in hardware or software, or a combination of hardware and software. In addition, a plurality of "modules" or a plurality of "parts" may be integrated into at least one module and implemented as at least one processor (not shown), except for those "modules" or "parts" that need to be implemented with specific hardware.

Meanwhile, the various components and areas in the drawings are schematically depicted. Accordingly, the technical ideas of the present disclosure are not limited by the relative sizes or spacing depicted in the accompanying drawings.

Hereinafter, the embodiments of the present disclosure will be described in greater detail with reference to the accompanying drawings.

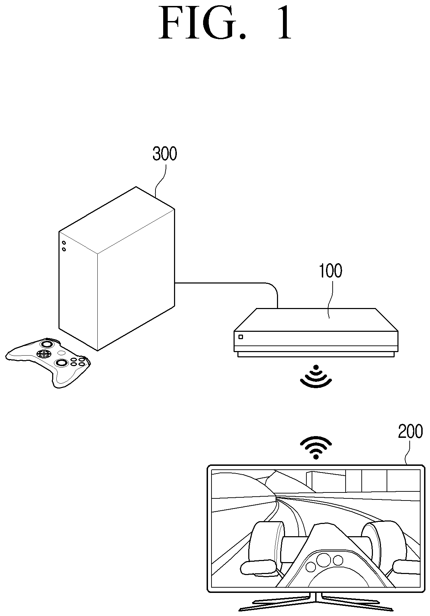

FIG. 1 is a view provided to schematically explain that an electronic device transmits image data according to an embodiment.

An electronic device 100 may be implemented as various types and forms of electronic devices that can be connected to a display device 200 and an external device 300. For example, the electronic device 100 may be replaced with an expression such as an One Connect (OC box, etc), but is not limited thereto.

The electronic device 100 receives data from the external device 300, and transmits the data received from the external device 300 to the display device 200. In this case, the data may include image data, audio data and metadata. The metadata may include various information regarding image and/or audio data.

The external device 300 is connected to the electronic device 100, and is implemented as one of various types and forms of electronic devices that can transmit image and audio data. For example, the external device 300 may be implemented as an electronic device capable of performing a function as a source device such as game console, Blu-ray disc player, set-top box, smart phone, tablet PC, laptop PC, etc., but is not limited thereto.

The display device 200 receives data from the electronic deice 100, and outputs image and audio signals by processing the received data. For example, the display device 200 is connected to the electronic device 100, and is implemented as one of various types and forms of electronic devices capable of receiving and outputting image and audio data. For example, the display device 200 is implemented as an electronic device capable of performing a function as a sink device such as TV, monitor, projector, etc., but is not limited thereto.

The electronic device 100 and the display device 200 are operable to communicate wirelessly. In this case, a network quality between the electronic device 100 and the display device 200 may deteriorate due to interference or the like. When the network quality between the electronic device 100 and the display device 200 is not good, the electronic device 100 is operable change resolution or frame rate of image data received from the external device 300, and transmit the image data of which resolution or frame rate has been changed, to the display device 200.

Changing the resolution may include lowering the resolution of the image data using downscaling. In addition, changing the frame rate may include lowering the frame rate of the image data using frame skip. In other words, when a network quality between the electronic device 100 and the display device 200 is not good, the electronic device 100 is operable reduce the amount of data transmitted to the display device 200 by lowering the resolution of the image data or the frame rate of the image data.

The specific operations in which the electronic device 100 changes the resolution or frame rate of the image data and transmit the changed image data to the display device 200 will be explained in greater detail through the drawing and the corresponding descriptions.

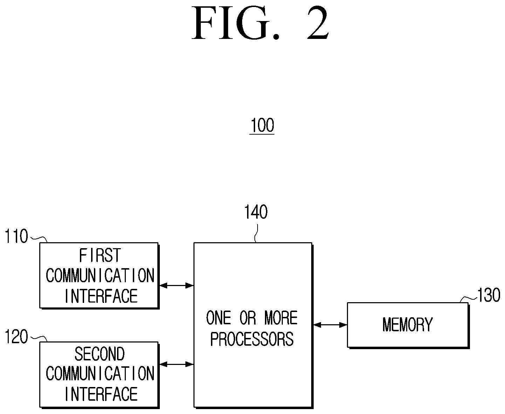

FIG. 2 is a block diagram provided to explain configuration of an electronic device according to an embodiment.

Referring to FIG. 2, the electronic device 100 includes a first communication interface 110, a second communication interface 120, a memory 130, and one or more processors 140. However, such configuration is an example, and in implementing an embodiment, some components may be omitted or new components may be added.

The first communication interface 110 performs communication with the external device 300 under the control of the one or more processors 140. For example, the first communication interface 110 may perform communication with the external device 300 using a High-Definition Multimedia Interface (HDMI).

The first communication interface 110 includes an HDMI communication module. The HDMI communication module may include a communication circuit that can perform data communication between the electronic device 100 and the external device 300 using an HDMI communication method.

The second communication interface 120 is operable to perform communication wirelessly with the display device 200 under the control of the one or more processors 140. For example, the second communication interface 120 may perform communication with the display device 200 using Wi-Fi.

The second communication interface 120 includes a Wi-Fi communication module. The Wi-Fi communication module includes a communication circuit capable of performing data communication between the electronic device 100 and the display device 200 using a Wi-Fi communication method. In this case, the Wi-Fi communication module is operable to perform Wi-Fi Direct communication for direct wireless communication between the electronic device 100 and the display device 200. However, the W-Fi communication module is not limited thereto, and the Wi-Fi communication module may perform wireless communication between the electronic device 100 and the display device 200 through an Access Point (AP).

The memory 130 stores instructions, data structures, and program codes readable by one or more processors 140. Operations performed by the one or more processors 140 may be implemented by executing instructions or codes of a program stored in the memory 130.

The memory 130 may include a flash memory type, a hard disk type, a multimedia card micro type, a memory of card type (e.g., SD or XD memory, etc.), and may include a non-volatile memory including at least one of read-only memory (ROM), electrically erasable programmable read-only memory (EEPROM), programmable read-only memory (PROM), magnetic memory, magnetic disk, optical disk, and a volatile memory such as random access memory (RAM) or static random access memory (SRAM).

The memory 130 may store one or more instructions and/or programs that cause the electronic device 100 to operate in accordance with the present disclosure.

The one or more processors 140 are operable to control the overall operations of the electronic device 100. For example, the one or more processors 140 are operatively coupled to the first communication interface 110, the second communication interface 120, and the memory 130 to control the electronic device 100. In addition, the one or more processors 140 are operable to execute one or more instructions of a program stored in the memory 130 to control the overall operations of the electronic device 100 so that the electronic device 100 receives data and transmits the received data. The one or more processors 140 may be composed of one or a plurality of processors.

The one or more processors 140 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The one or more processors 140 may control one or any combination of the other components of the electronic device 100, and may perform communication-related operations or data processing.

For example, the one or more processors 140 may perform a method according to an embodiment by executing one or more instructions stored in the memory 130.

In a case where the method according to an embodiment includes a plurality of operations, the plurality of operations may be performed by one processor or by a plurality of processors. For example, in a case where a first operation, a second operation, and a third operation are performed by the method according to an embodiment, all of the first operation, the second operation, and the third operation may be performed by a first processor, or the first operation and the second operation may be performed by the first processor (e.g., a general-purpose processor) and the third operation may be performed by a second processor (e.g., an artificial intelligence-dedicated processor).

The one or more processors 140 may be implemented as a single-core processor including one core, or may be implemented as one or more multi-core processors including a plurality of cores (e.g., homogeneous multiple cores or heterogeneous multiple cores). In a case where the one or more processors 140 are implemented as multi-core processors, each of the plurality of cores included in the multi-core processors may include a processor internal memory such as a cache memory or an on-chip memory, and a common cache shared by the plurality of cores may be included in multi core processors. In addition, each of the plurality of cores (or some of the plurality of cores) included in the multi-core processors may independently read and execute program instructions for implementing the method according to an embodiment, or all (or some) of the plurality of cores may be linked to each other to read and execute program instructions for implementing the method according an embodiment.

In a case where the method according to an embodiment includes a plurality of operations, the plurality of operations may be performed by one of the plurality of cores included in the multi-core processors, or may be performed by the plurality of cores. For example, in a case where a first operation, a second operation, and a third operation are performed by the method according to an embodiment, all of the first operation, the second operation, and the third operation may be performed by a first core included in the multi-core processors, or the first operation and the second operation may be performed by the first core included in the multi-core processors, and the third operation may be performed by a second core included in the multi-core processors.

In embodiments of the present disclosure, the processor may refer to a system on a chip (SoC) in which one or more processors and other electronic components are integrated, a single-core processor, multi-core processors, or a core included in the single-core processor or the multi-core processors. Here, the core may be implemented as a CPU, a GPU, an APU, an MIC, a DSP, an NPU, a hardware accelerator, a machine learning accelerator, or the like, but the embodiments of the present disclosure are not limited thereto.

Hereinafter, for convenience of explanation, the one or more processors 140 will be referred to as the processor 140.

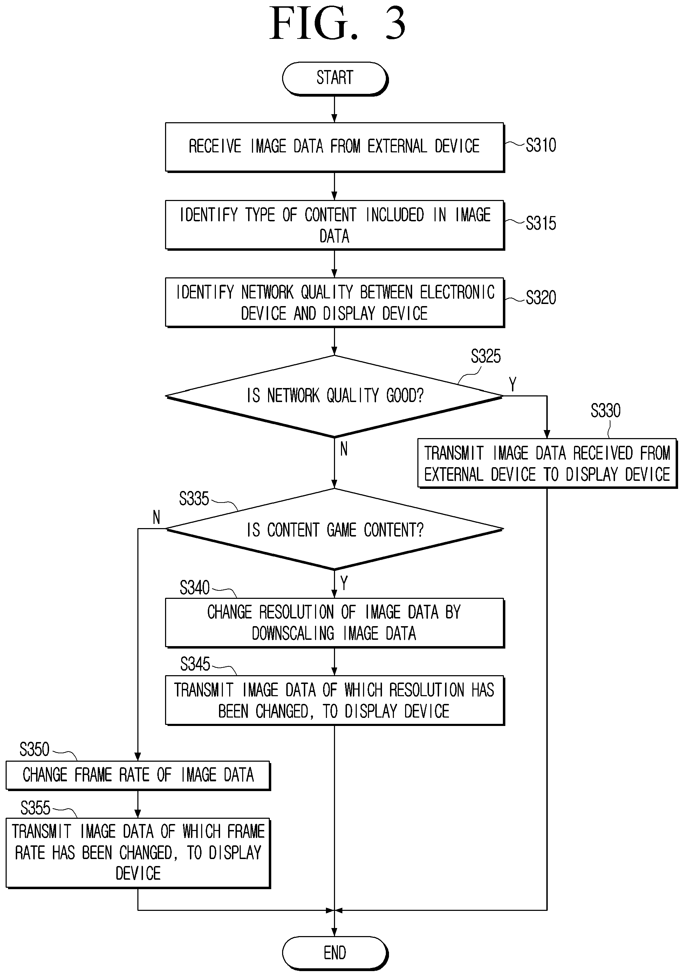

FIG. 3 is a flowchart provided to explain an operation in which an electronic device transmits image data to a display device according to an embodiment.

The processor 140 receives image data from the external device 300 through the first communication interface 110 (S310).

The processor 140 identifies the type of content included in the image data (S315).

The type of content may be classified depending on whether the content is a game content or a general content. In other words, the content included in the image data may be a game content or a general content. The general content may include various types of contents such as movies, dramas, photos, broadcasts, etc. excluding a game content.

The processor 140 identifies the type of content included in the image data using information received from the external device 300 through the first communication interface 110.

For example, the external device 300 may be preset to, when a game content is included in data that the external device 300 transmits to the electronic device 100, transmit information indicating that the game content is included to the electronic device 100.

According to an embodiment, the information may include Auto Low Latency Mode (ALLM) information defined in HDMI (e.g., HDMI 2.1). The ALLM information may be included in metadata.

For example, when a game content is included in data that the external device 300 transmits to the electronic device 100, the external device 300 transmits a signal for the display device 200 to switch the mode of the display device 200 to a mode for the game (e.g., a low latency mode) automatically using the ALLM information. The ALLM may be replaced with expressions such as a mode game, etc., but is not limited thereto.

The processor 140 identifies the type of content based on ALLM information received from the external device through the first communication interface 110.

For example, when the ALLM information is received from the external device 300, the processor 140 identifies the image content received from the external device 300 as a game content, and when the ALLM information is not received from the external device 300, the processor 140 identifies the image data received from the external device 300 as a general content.

The processor 140 identifies the network quality between the electronic device 100 and the display device 200 (S320).

For example, the processor 140 receives information regarding the network quality between the electronic device 100 and the display device 200 from the display device 200 through the second communication interface, and identifies the network quality between the electronic device 100 and the display device 200 based on the received information. In this case, the network may include a wireless network. The network quality may be replaced with expressions such as network state, network situation, channel quality, channel state, channel situation, etc.

The information regarding the network quality may include a packet loss rate. For example, the display device 200 may identify a packet loss rate based on packets received from the electronic device 100, and transmit information regarding the packet loss rate to the electronic device 100.

The processor 140 receives the information regarding the packet loss rate from the display device 200 through the second communication interface 120, and identifies the network quality between the electronic device 100 and the display device 200 based on the packet loss rate.

For example, when the packet loss rate is less than a threshold value, the processor 140 identifies the network quality as good, and when the packet loss rate is equal to or greater than the packet loss rate, the processor 140 identifies the network quality as being not good.

Meanwhile, in the above-described embodiment, it is described that the network quality is measured based on the packet loss rate, but the present disclosure is not limited thereto. For example, the network quality between the electronic device 100 and the display device 200 may be determined by various indicators such as bandwidth, time delay, jitter, etc.

In the present disclosure, poor network quality may include low channel throughput due to channel interference or the like. Accordingly, when the network quality is not good, packet loss may occur and the packet loss rate may increase.

When the network quality between the electronic device 100 and the display device 200 is good (S325-Y), the processor 140 transmits image data received from the external device 300 to the display device 200 through the second communication interface 120 (S330).

In this case, the electronic device 100 transmits the image data wirelessly to the display device 200. Here, in that wireless communication performs data communication by transmitting and receiving radio waves without using a cable, the wireless communication is distinguished from the wired communication that performs data communication using a cable.

For example, the processor 140 compresses image data by encoding the image data received from the external device 300 using a video codec. In addition, the processor 140 transmits the compressed image data to the display device 200 using the second communication interface 120.

When the network quality between the electronic device 100 and the display device 200 is not good, the processor 140 changes the resolution or frame rate of the image data from among data based on the type of content. In addition, the processor 140 transmits the image data of which resolution or frame rate has been changed, to the display device 200 through the second communication interface 120.

According to an embodiment, when the network quality between the electronic device 100 and the display device 200 is not good (S325-N) and the content is a game content (S335-Y), the processor 140 changes the resolution of the image data by downscaling the image data (S340). In this case, the frame rate of the image data does not change. Downscaling image data may be expressed as downscaling image frames. The resolution of the downscaled image data may be preset. For example, when the resolution of the image data received from the external device 300 is 4k, the processor 140 may lower the resolution of the image data to 2k through downscaling.

In addition, the processor 140 transmits the image data of which resolution has been changed, to the display device 200 through the second communication interface 120 (S345).

For example, the processor 140 compresses image data by encoding image data with reduced resolution using a video codec. The processor 140 transmits the compressed image data to the display device 200 using the second communication interface 120.

According to an embodiment, when the network quality between the electronic device 100 and the display device 200 is not good (S325-N) and the content is not a game content, that is, the content is a general content (S335-N), the processor 140 changes the frame rate of the image data using frame skip (S350). In this case, the resolution of the image data does not change. The frame skip may be used to lower the frame rate of some frames by skipping some frames among the image frames. The frame skip may be preset. For example, when the frame rate of the image received from the external device 300 is 60 fts (frame per second) and the frame skip rate is 1/2, the processor 140 may lower the frame rate of the image data to 30 fps using frame skip.

The processor 140 transmits the image data of which frame rate has been changed, to the display device 200 through the second communication interface 120 (S355).

For example, the processor 140 compresses the image data by encoding image data with a reduced frame rate using a video codec. The processor 140 transmits the compressed image data to the display device 200 using the second communication interface 120.

As such, according to the present disclosure, when the electronic device 100 transmits data to the display device 200, if the network quality between the electronic device 100 and the display device 200 is not good, the electronic device 100 reduces the amount of data transmitted to the display device 200 by changing the resolution or frame rate of the image data to ensure more stable data transmission.

In this case, since a game content requires a faster response from the user than a general content, when the display device 200 displays the image after performing image quality processing on the image data, it is important to minimize the delay time until the image is displayed by the image quality processing. Accordingly, when the content transmitted to the display device 200 is a game content, the electronic device 100 reduces the amount of data transmitted to the display device 200 by changing the resolution of the image data, and when the content transmitted to the display device 200 is a general content, the electronic device 100 reduces the amount of data transmitted to the display device 200 by changing the frame rate of the image data.

Meanwhile, the data that the electronic device 100 receives from the external device 300 may include image data, audio data and metadata.

In this case, the processor 140 transmits audio data and metadata received from the external device 300 to the display device 200 through the second communication interface 120. In other words, audio data and metadata istransmitted to the display device 200 along with image data.

For example, when the network quality between the electronic device 100 and the display device 200 is good, the processor 140 compresses image data using a video codec, compresses audio data using an audio codec, and transmits the compressed image data, the compressed audio data and metadata to the display device 200 through the second communication interface 120.

When the network quality between the electronic device 100 and the display device 200 is not good, the processor 140 compresses the image data of which resolution or frame rate has been changed using a video codec, compresses the audio data using an audio codec, and transmits the compressed image data, the compressed audio data and metadata to the display device 200 through the second communication interface 120. In this case, the metadata may include ALLM information.

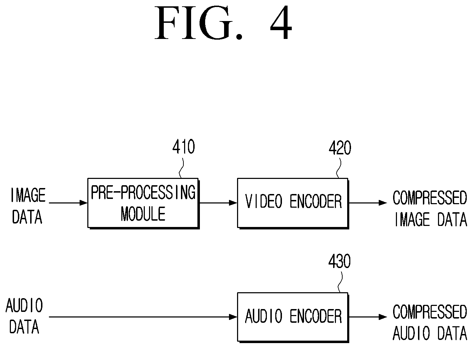

FIG. 4 is a view provided to explain an operation of an electronic device according to an embodiment.

Referring to FIG. 4, the electronic device 100 includes a pre-processing module 410, a video encoder 420 and an audio encoder 430. The components illustrated in FIG. 4 may be implemented as hardware controlled by the processor 140, or may be components that are implemented as the processor 140 executes programs or instructions stored in the memory 130.

The pre-processing module 410 may change the resolution or frame rate of image data.

For example, when the content included in data (e.g., image and audio data) received from the external device 300 is a game content, the pre-processing module 410 may lower the resolution of the image data by downscaling the resolution of the image data received from the external device 300. Alternatively, when the content included in data received from the external device 300 is a general content, the pre-processing module 410 may lower the frame rate of the image data received from the external device 300 using frame skip.

The image data of which resolution or frame rate has been changed is transmitted to the video encoder 420 to be encoded. The video encoder 420 compresses the image data using a video codec.

The audio encoder 430 compresses the audio data received from the external device 300 using an audio codec.

The compressed image data, the compressed audio data and metadata are transmitted to the display device 200 by the second communication interface 120.

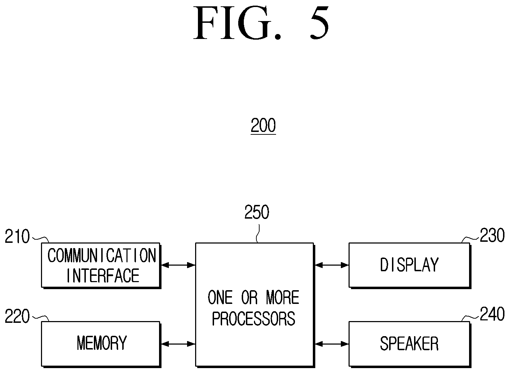

FIG. 5 is a block diagram provided to explain configuration of a display device according to an embodiment.

Referring to FIG. 5, the display device 200 includes a communication interface 210, a memory 220, a display 230, a speaker 240, and one or more processors 250. However, such configuration is only an example, and in implementing the present disclosure, some components may be omitted or new components may be added.

The communication interface 210 is operable to perform communication wirelessly with the electronic device 100 under the control of the one or more processors 250. For example, the communication interface 210 performs communication with the electronic device 100 using Wi-Fi.

The communication interface 210 may include a Wi-Fi communication module. The Wi-Fi communication module may include a communication circuit capable of performing data communication between the electronic device 100 and the display device using a Wi-Fi communication method.

The memory 220 is operable to store instructions, data structures and program codes that can be read by the one or more processors 250. The operations performed by the one or more processors 250 may be implemented by executing the instructions or codes of the programs stored in the memory 220.

The memory 220 may include memories of flash type, hard disk type, multimedia card type, or card type (e.g., SD or XD memory, etc.), and may include a non-volatile memory including at least one of ROM, EEPROM, PROM, magnetic memory, magnetic disk, or optical disk, or a volatile memory such as RAM or SRAM.

The memory 220 is operable to store one or more instructions and/or programs that cause the display device 200 to operate according to the present disclosure.

The display 230 is operable to display an image under the control of the one or more processors 250. The one or more processors 250 are operable to process image data received from the electronic device 100 and output the image on the screen of the display 230.

The display 230 may be implemented as a display that includes a self-luminous element, or a display that includes a non-luminous element and a backlight. For example, the display 110 may be implemented as various types of displays, such as a liquid crystal display (LCD), organic light emitting diodes (OLED) display, light emitting diodes (LED), micro LED, mini LED, plasma display panel (PDP), quantum dot (QD) display, quantum dot light-emitting diodes (QLED), and the like. The display 230 may also include driving circuits, backlight units, and the like, which may be implemented as a-si TFTs, low temperature poly silicon (LTPS) TFTs, organic TFTs (OTFTs), and the like. In addition, a touch sensor may be disposed on the front of the display 230 to detect touch input. Further, the display 230 may be implemented as a flat display, a curved display, a flexible display capable of folding and/or rolling, etc.

The speaker 240 is operable to output audio, a notification, a voice message, or the like, under the control of the one or more processors 250. For example, the one or more processors 250 may process audio data received from the electronic device 100 to output audio signals through the speaker 240.

The one or more processors 250 are operable to control the overall operations of the display device 200. For example, the one or more processors 250 are connected to the communication interface 210, the memory 220, the display 230, and the speaker 240 to control the display device 200. In addition, the one or more processors 250 are operable to execute one or more instructions of a program stored in the memory 220 to control the overall operations so that the display device 200 processes received data to output image and audio signals. The one or more processors 250 may be composed of one or a plurality of processors.

The one or more processors 250 may include one or more of a CPU, GPU, APU, MIC, DSP, NPU, hardware accelerator, or machine learning accelerator. The one or more processors 250 may control one or any combination of the other components of the electronic device 100, and may perform operations or data processing with respect to communication.

For example, the one or more processors 250 are operable to execute a method according to an embodiment of the present disclosure by executing one or more instructions stored in the memory 220.

In a case where the method according to an embodiment includes a plurality of operations, the plurality of operations may be performed by one processor or by a plurality of processors. For example, in a case where a first operation, a second operation, and a third operation are performed by the method according to an embodiment, all of the first operation, the second operation, and the third operation may be performed by a first processor, or the first operation and the second operation may be performed by the first processor (e.g., a general-purpose processor) and the third operation may be performed by a second processor (e.g., an artificial intelligence-dedicated processor).

The one or more processors 250 may be implemented as a single-core processor including one core, or may be implemented as one or more multi-core processors including a plurality of cores (e.g., homogeneous multiple cores or heterogeneous multiple cores). In a case where the one or more processors 250 are implemented as multi-core processors, each of the plurality of cores included in the multi-core processors may include a processor internal memory such as a cache memory or an on-chip memory, and a common cache shared by the plurality of cores may be included in multi core processors. In addition, each of the plurality of cores (or some of the plurality of cores) included in the multi-core processors may independently read and execute program instructions for implementing the method according to an embodiment, or all (or some) of the plurality of cores may be linked to each other to read and execute program instructions for implementing the method according an embodiment.

In a case where the method according to an embodiment includes a plurality of operations, the plurality of operations may be performed by one of the plurality of cores included in the multi-core processors, or may be performed by the plurality of cores. For example, in a case where a first operation, a second operation, and a third operation are performed by the method according to an embodiment, all of the first operation, the second operation, and the third operation may be performed by a first core included in the multi-core processors, or the first operation and the second operation may be performed by the first core included in the multi-core processors, and the third operation may be performed by a second core included in the multi-core processors.

In embodiments of the present disclosure, the processor may refer to a system on a chip (SoC) in which one or more processors and other electronic components are integrated, a single-core processor, multi-core processors, or a core included in the single-core processor or the multi-core processors. Here, the core may be implemented as a CPU, a GPU, an APU, an MIC, a DSP, an NPU, a hardware accelerator, a machine learning accelerator, or the like, but the embodiments of the present disclosure are not limited thereto.

Hereinafter, for convenience of explanation, the one or more processors 250 will be referred to as the processor 250.

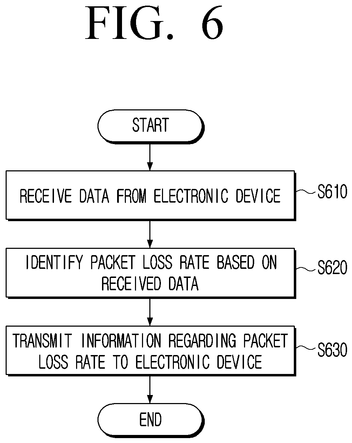

FIG. 6 is a flowchart provided to explain an operation in which a display device obtains information regarding a network quality according to an embodiment.

The processor 250 receives data from the electronic device 100 through the communication interface 210 (S610). In this case, the data may be received by the display device 200 in a packet form.

The processor 250 identifies a packet loss rate based on the data received from the electronic device 100 (S620).

For example, the processor 250 may identify whether packet loss has occurred using the identifier of the packet received from the electronic device 100. For example, the identifier may be a number. When the number of packets received sequentially is not consecutive, the processor 250 may identify that packet loss has occurred and identify the number of lost packets. Subsequently, the processor 250 may identify the packet loss rate based on the number of lost packets and the total number of packets. The packet loss rate may be calculated by the ratio of the number of lost packets to the total number of packets. However, this is only an example, and the display device 200 may identify the lost packets and the packet loss rate using various known methods.

The processor 250 transmits information regarding the packet loss rate to the electronic device 100 through the communication interface 210 (S630). The electronic device 100 identifies the network quality between the electronic device 100 and the display device 200 based on the information regarding the packet loss rate received from the display device 200.

Meanwhile, in the above embodiment, it is described that the electronic device 100 identifies the network quality, but the present disclosure is not limited thereto. For example, the display device 200 may identify the network quality based on the packet loss rate and transmit information regarding the network quality to the electronic device 100.

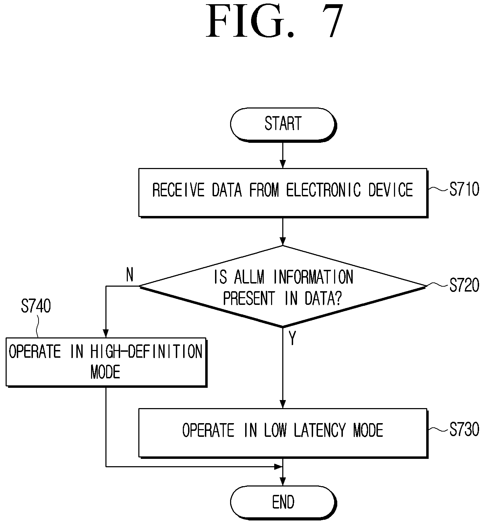

FIG. 7 is a flowchart provided to explain an operation in which a display device processes data received from an electronic device according to an embodiment.

The processor 250 receives data from the electronic device 100 through the communication interface 210 (S710). In this case, the data may include image data, audio data and metadata.

The processor 250 identifies whether ALLM information is present in the data received from the electronic device 100 (S720). ALLM information may be included in the metadata.

When ALLM information is present in the data received from the electronic device 100 (S720-Y), the processor 250 sets the mode of the display device 200 to a low-latency mode (S730).

The low-latency mode may include a mode for minimizing the delay time due to image quality processing of image data in the process that the display device 200 performs image quality processing on the image data and displays the image on the screen.

For example, when the mode of the display device 200 is a low-latency mode, the processor 250 obtains image data by decoding compressed image data from among the data received from the electronic device 100. In addition, the processor 250 changes the resolution of the image data to match the resolution of the screen of the display 230. Here, the processor 250 changes the resolution of the image data by upscaling or downscaling the image data. For example, when the resolution of the display 230 is 4K and the resolution of the image data received from the electronic device 100 is 2K, the processor 250 may change the resolution of the image data to 4K by upscaling the image data. Upscaling the image data may be expressed as upscaling image frames.

When the mode of the display device 200 is a low-latency mode, the processor 250 performs minimal image quality processing on the image data.

When ALLM information is present in the metadata received from the electronic device 100, the content received from the electronic device 100 corresponds to a game content. In this case, in order to minimize the delay time for the image to be displayed on the screen due to image quality processing for the image data, the processor 250 performs only the minimal image quality processing from among image quality processing that can be performed by the display device 200.

For example, when performing image quality processing on image data, if other image data (e.g., when performing image quality processing on an image frame, the previous image frame or the next image frame of the image frame) is used, it may take some time to perform image quality processing on the image data. In this case, the delay time until the image is displayed on the screen increases due to image quality processing. Meanwhile, considering that a game content requires a faster response of the user, when the delay time increases, the user cannot enjoy the game content properly. Accordingly, the type of image quality processing that is performed in the low-latency mode by the display device 200 may be preset in consideration of the time required for the display device 200 to perform image quality processing.

The processor 250 displays an image on the screen of the display 230 using quality-processed image data. The display 230 may be implemented as a display that supports a high refresh rate or a variable refresh rate (VRR0. Accordingly, a game image with a high frame rate or a variable frame rate can be displayed on the screen of the display 230.

In addition, the processor 250 obtains audio data by decoding compressed audio data from among data received from the electronic device 100. In addition, the processor 250 outputs an audio signal through the speaker 240 using the audio data.

When ALLM information is not present in the data received from the electronic device 100 (S720-N), the processor 250 may set the mode of the display device 200 to a normal mode.

The normal mode may include a mode in which the display device 200 performs various image quality processing on the image data to display a high-quality image.

For example, when the mode of the display device 200 is a normal mode, the processor 250 obtains image data by decoding compressed image data from among data received from the electronic device 100. In addition, the processor 250 changes the resolution of the image data to match the resolution of the screen of the display 230. Here, the processor 250 changes the resolution of the image data by upscaling or downscaling the image data. For example, when the resolution of the screen of the display 230 is 4K and the resolution of the image data received from the electronic device 100 is 2K, the processor 250 may change the resolution of the image data to 4K by upscaling the image data.

When the mode of the display device 200 is a normal mode, the processor 250 performs various image quality processing on the image data.

When ALLM information is not present in the metadata received from the electronic device 100, the content received from the electronic device corresponds to a general content. In the case of a general content, delay time is not a big problem. Accordingly, in order to display a high-quality image on the screen, the processor 250 performs image quality processing that can be performed by the display device 200 on the image data.

For example, the processor 250 changes the frame rate of the image data based on the refresh rate of the display 230. In this case, the refresh rate of the display 230 may be the maximum refresh rate of the display 230 or the refresh rate set by the user input. The processor 250 may change the frame rate of the image data to match the refresh rate of the display 230 using Motion Estimation Motion Compensation (MEMC). For example, when the frame rate of the image data received from the electronic device 100 is 30 fps and the refresh rate of the display 230 is 60hz, the processor 250 may change the frame rate of the image data to 60 fps.

In addition, in order to display a high-quality image on the screen, the processor 250 may perform various image quality processing on the image data, such as noise reduction (NR) processing, compression artifact removal processing caused by compression of image data, motion judder removal, etc. However, the present disclosure is not limited thereto, and various image quality processing can be improve the quality of the image displayed on the screen can be applied to the image data.

The processor 250 displays an image on the screen of the display 230 using quality-pressed image data. In addition, the processor 250 obtains audio data by decoding compressed audio data from among data received from the electronic device 100. The processor 250 outputs an audio signal through the speaker 240 using the audio data.

In the present disclosure, when the network quality between the electronic device 100 and the display device 200 is not good, the electronic device 100 reduces the amount of data transmitted to the display device 200 for stable data transmission.

Here, when the content transmitted to the display device 200 is a game content, it is important to minimize the delay time in order to provide fun and dynamic game content to the user. Accordingly, in order to reduce the amount of transmission, the electronic device 100 changes the resolution of the game image. For example, if the resolution is lowered from 4K to 2K, the amount of data transmitted may be reduced by less than a quarter. When the game image is received from the electronic device 100, the display device 200 may change the resolution of the game image to match the resolution of the screen, perform only minimal image quality processing, and implement the game image on the screen with an original frame rate of the game image without image quality processing related to the frame rate. Accordingly, the delay time in the display device 200 can be minimized.

Alternatively, when the content transmitted to the display device 200 is a general content, the electronic device 100 lowers the frame rate of the image in order to reduce the amount of transmission. For example, if the frame rate is lowered from 60 fps to 30 fps, the amount of data transmitted may be reduced by half. When a general image is received from the electronic device 100, the display device 200 may change the resolution of the image to match the resolution of the screen, perform image quality processing related to the frame rate and various image quality processes to implement a high-quality image on the screen.

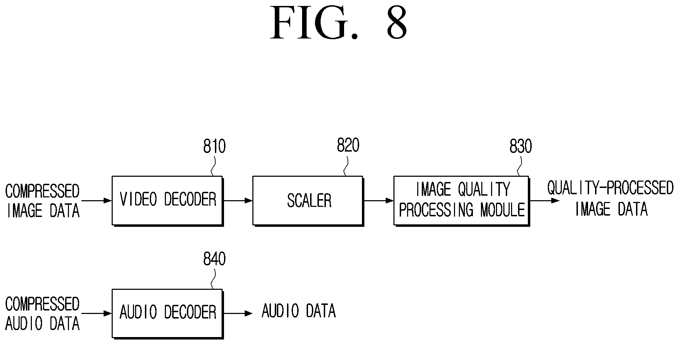

FIG. 8 is a view provided to explain an operation of a display device according to an embodiment.

Referring to FIG. 8, display device 200 includes a video decoder 810, a scaler 820, an image quality processing module 830, and an audio decoder 840. The components illustrated in FIG. 8 may be implemented as hardware controlled by the processor 250, or may be implemented by the processor 250 executing programs or instructions stored in the memory 220.

The video decoder 810 is operable to obtain image data by decoding compressed image data received from the electronic device 100.

The scaler 820 is operable to change the resolution of the image data to match the resolution of the screen of the display 230. For example, the scaler 820 is operable to change the resolution of the image data by upscaling or downscaling the resolution of the image data.

The image quality processing module 830 is operable to perform image quality processing on image data.

For example, when the data received from the electronic device 100 includes a game content, the image quality processing module 830 performs the minimum image quality processing among the image quality processing that can be performed by the image quality processing module 830. In addition, when the data received from the electronic device 100 includes a general content, the image quality processing module 830 performs image quality processing that can be performed by the image quality processing module 830. The quality-processed image data is transmitted to the display 230, and the display 230 may display an image on the screen of the display 230 using the quality-processed image data.

The audio decoder 840 obtains audio data by decoding compressed audio data received from the electronic device 100. The audio data is transmitted to the speaker 240, and the speaker 240 outputs an audio signal using the audio data.

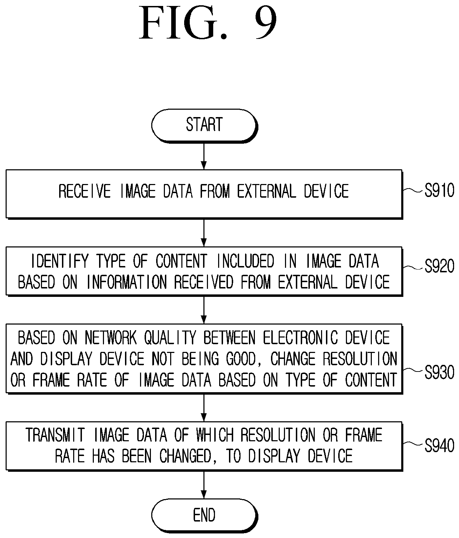

FIG. 9 is a flowchart provided to explain a method of transmitting data of an electronic device that performs communication wirelessly with a display device.

Image data is received from an external device (S910).

The type of content included in the image data is identified based on information received from the external device (S920).

When the network quality between the electronic device and the display device is not good, the resolution or frame rate of the image data is changed based on the type of content (S930).

The image data of which resolution or frame rate has been changed is transmitted to the display device (S940).

Step S920 includies identifying the type of content based on ALLM information received from an external device.

In addition, content included in image data may be a game content or a general content.

In step S930, when the content is a game content, the resolution of the image data is changed by downscaling the image data, and when the content is a general content, the frame rate of the image data is changed using frame skip.

In this case, when the content is a game content, the frame rate of the image data may not change, and when the content is a general content, the resolution of the image data may not change.

In addition, data received from an external device may include image data, audio data, and metadata. In step S940, when the network quality between the electronic device and the display device is not good, image data of which resolution or frame rate has been changed is compressed using a video codec, audio data is compressed using an audio codec, and the compressed image data, the compressed audio data and the metadata are transmitted to the display device. In this case, the metadata may include ALLM information.

In addition, data received from an external device may include image data, audio data, and metadata. The data transmission method further includes, when the network quality between the electronic device and the display device is good, compressing the image data using a video codec, compressing the audio data using an audio codec, and transmitting the compressed image data, the compressed audio data, and metadata to the display device. In this case, metadata may include ALLM information.

In addition, the data transmission method further includes receiving information regarding the network quality between the electronic device and the display device from the display device and identifying the network quality between the electronic device and the display device based on the received information.

In this case, the information regarding the network quality may include a packet loss rate.

Meanwhile, the various embodiments described above may be implemented in a computer or a recording medium readable by a computer or a similar device using software, hardware, or a combination of software and hardware. In some cases, the embodiments described in the specification may be implemented by a processor itself. According to software implementation, the embodiments such as the procedures and functions described in the specification may be implemented by separate software modules. Each of the software modules may perform one or more functions and operations described in the specification.

Meanwhile, computer instructions for performing processing operations of an electronic device according to the various embodiment of the present disclosure described above may be stored in a non-transitory computer-readable medium. The computer instructions stored in the non-transitory computer-readable medium may allow a specific device to perform the processing operations of the modular electronic device 100 according to the various embodiments described above in case that the computer instructions are executed by a processor of the specific device.

The non-transitory computer-readable medium is not a medium that stores data therein for a while, such as a register, a cache, or a memory, and indicates a medium that semi-permanently stores data therein and is readable by a device. A specific example of the non-transitory computer-readable medium may include a compact disk (CD), a digital versatile disk (DVD), a hard disk, a Blu-ray disk, a universal serial bus (USB), a memory card, a read-only memory (ROM), or the like

While preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

All of the features described herein may be combined with any of the other features described herein, in any combination.

## Claims

1. An electronic device comprising:
a first communication interface;
a second communication interface configured to perform communication wirelessly with a display device;
one or more processors configured to:
receive image data from an external device through the first communication interface;
identify a type of content included in the image data based on information received from the external device through the first communication interface;
based on a network quality between the electronic device and the display device , change resolution or frame rate of the image data based on the type of content; and
transmit the image data of which resolution or frame rate has been changed, to the display device through the second communication interface.

2. The device as claimed in claim 1, wherein the one or more processors are configured to identify a type of the content based on Auto Low Latency Mode, ALLM, information received from the external device through the first communication interface.

3. The device as claimed in claim 1 or claim 2, wherein the content included in the image data is a game content or a general content.

4. The device as claimed in claim 3, wherein the one or more processors are configured to:
based on the content being the game content, change resolution of the image data by downscaling the image data; and
based on the content being the general content, change frame rate of the image data using frame skip.

5. The device as claimed in claim 3 or claim 4, wherein based on the content being the game content, a frame rate of the image data is not changed, and based on the content being the general content, a resolution of the image data is not changed.

6. The device as claimed in any preceding claim, wherein the data received from the external device includes the image data, audio data and metadata;
wherein the one or more processors are configured to, based on a network quality between the electronic device and the display device being not good, compress the image data of which resolution or frame rate is changed using a video codec, compress the audio data using an audio codec, and transmit the compressed image data, the compressed audio data and the metadata to the display device through the second communication interface; and
wherein the metadata includes ALLM information.

7. The device as claimed in any preceding claim, wherein the data received from the external device includes the image data, audio data and metadata;
wherein the one or more processors are configured to, based on a network quality between the electronic device and the display device being good, compress the image data using video codec, compress the audio data using audio codec, and transmit the compressed image data, the compressed audio data and the metadata to the display device through the second communication interface; and
wherein the metadata includes ALLM information.

8. The device as claimed in any preceding claim, wherein the one or more processors are configured to receive information regarding a network quality between the electronic device and the display device from the display device through the second communication interface, and identify a network quality between the electronic device and the display device based on the received information.

9. The device as claimed in claim 8, wherein the information regarding the network quality includes a packet loss rate.

10. A method for transmitting data of an electronic device that performs communication with a display device wirelessly, the method comprising:
receiving image data from an external device;
identifying a type of content included in the image data based on information received from the external device;
based on a network quality between the electronic device and the display device, changing resolution or frame rate of the image data based on the type of content; and
transmitting the image data of which resolution or frame rate has been changed, to the display device.

11. The method as claimed in claim 10, wherein the identifying comprises identifying a type of the content based on Auto Low Latency Mode, ALLM, information received from the external device.

12. The method as claimed in claim 10 or claim 11, wherein the content included in the image data is a game content or a general content.

13. The method as claimed in claim 12, wherein the changing comprises:
based on the content being the game content, changing resolution of the image data by downscaling the image data; and
based on the content being the general content, changing frame rate of the image data using frame skip.

14. The method as claimed in claim 12 or claim 13, wherein based on the content being the game content, frame rate of the image data is not changed, and based on the content being the general content, resolution of the image data is not changed.

15. The method as claimed in any one of claims 10 to 14, wherein the data received from the external device includes the image data, audio data and metadata;
wherein the transmitting comprises, based on a network quality between the electronic device and the display device, compressing the image data of which resolution or frame rate is changed using a video codec and compressing the audio data using an audio codec;
transmitting the compressed image data, the compressed audio data and the metadata to the display device; and
wherein the metadata includes ALLM information.
